# EUROPÄISCHE PATENTSCHRIFT

(11) **EP 1 649 252 B1**
(45) Veröffentlichungstag und Bekanntmachung des Hinweises auf die Patenterteilung: **21.11.2007**
(21) Anmeldenummer: 04763625.3
(22) Anmeldetag: 29.07.2004
(51) Int. Cl.: G01F 11/02, B05C 17/01, B05C 11/10, G01N 35/10

(54) **VORRICHTUNG UND VERFAHREN ZUM DOSIERTEN AUSBRINGEN EINES VISKOSEN MEDIUMS**
DEVICE AND METHOD FOR THE METERED DISCHARGING OF A VISCOUS MEDIUM
DISPOSITIF ET PROCEDE POUR LA DISTRIBUTION DOSEE D'UN MILIEU VISQUEUX

(30) Priorität: 31.07.2003 DE 10335146
(43) Veröffentlichungstag der Anmeldung: 26.04.2006
(73) Patentinhaber: Fraunhofer-Gesellschaft zur Förderung der angewandten Forschung e.V., 80686 München (DE)
(72) Erfinder: OTHMAN, Nabih, 70563 Stuttgart (DE)
(74) Vertreter: Rösler, Uwe
(86) Internationale Anmeldenummer: PCT/EP2004/008533
(87) Internationale Veröffentlichungsnummer: WO 2005/012845

(56) Entgegenhaltungen:
- EP-A- 0 782 886
- DE-A- 3 728 054
- DE-A- 4 012 879
- DE-B- 2 227 930
- DE-U- 9 405 686
- FR-A- 2 597 025
- US-A- 5 188 259
- KOHLER F ET AL: "DIE TECHNIKEN FÜR DAS DISPENSEN VON LOTPASTEN PUNKT FÜR PUNKT" PRODUCTRONIC, HUTHIG, HEIDELBERG,, DE, Bd. 4, 1991, Seiten 18-24, XP008041159 ISSN: 0930-1100 in der Anmeldung erwähnt

## Beschreibung

### Technisches Gebiet

Die Erfindung bezieht sich auf eine Vorrichtung sowie ein Verfahren zum dosierten Ausbringen eines viskosen Mediums aus einer Kartuschen-Nadeleinheit, mit einer Kolbeneinheit, die mittels eines Aktuators angetrieben, axialwärts in die einseitig offen ausgebildete Kartusche eindringt und mittels dosierter Druckbeaufschlagung innerhalb der Kartusche das viskose Medium durch die Nadeleinheit mengendosiert austrägt.

### Stand der Technik

Gattungsgemäße Vorrichtungen zum dosierten Ausbringen von viskosen Medien, vorzugsweise nieder-, mittel- und hochviskosen Flüssigkeiten, wie beispielsweise Öle, Fette, Klebstoffe und Lötpasten, um nur einige zu nennen, sind vielfach auch unter der Bezeichnung "Dispenser" bekannt und werden in unterschiedlichsten Technikgebieten, wie Feinwerk-, Nano-, Mikrotechnik, insbesondere Bereiche der Mikroelektronik, Mikrooptik, Mikromechanik als auch in der Bio- und Medizintechnik eingesetzt. Typische Anwendungsfälle derartiger Dispenser-Systeme für mittel- und hochviskose Medien betreffen beispielsweise das exakte Ausbringen und Positionieren kleinster Klebstofftropfen zum Fügen in der Elektronikfertigung, die Schmierung von Lagern mit Ölen und Fetten im Maschinenbau, vorzugsweise in Bereichen der Mikromechanik, sowie das kontinuierliche oder zyklische Fördern von Reagenzien in der chemischen Industrie oder zu Zwecken der Analysetechnik oder auch zur Verabreichung feinst dosierter flüssiger Arzneimittel zur Patientenversorgung, insbesondere in der Intensivmedizin.

Aus einem Beitrag von F. Kohler "Punkt für Punkt - Die Techniken für das Dispensen von Lotpasten", erschienen in "productronic" (1991), No. 4, Seiten 18 bis 20, ist eine Übersicht derzeit auf dem Markt verfügbarer Dispenser-Systeme für mittel- und hochviskoser Medien zu entnehmen, die insbesondere zur Erzeugung und Plazierung von Tropfen, sogenannter Dots, im Rahmen des zyklischen Dispensens von Medien geeignet sind. Hierbei unterscheidet man grundsätzlich folgende Systeme:

### a) Zeit/Druck-Kartuschen-Dosiersystem

Dieses System kann als Basissystem aufgefasst werden, das in gleicher oder abgewandelter Form auch in den nachstehend kurz erläuterten Dispenser-Systemen zur dosierten Bereitstellung viskoser Medien Verwendung findet. Das als Basissystem bezeichnete Dispenser-System besteht aus einer Kartusche mit einer Dispensernadel am unteren Ende sowie einem Druckverschluss am oberen Ende der Kartusche. Über gezielten Druckaufbau im oberen Ende der Kartusche wird eine Art Kolbeneinheit gegen das übrige Kartuschenvolumen gepresst, in dem sich das zu dispensende, viskose Medium zum Austrag durch die Dosiernadel befindet. Kartuschen/Dispensemadel- Einheiten sind als Einwegartikel verfügbar und lösbar fest gegen einen entsprechenden Druckanschluss zu verfügen.

### b) Rotations-Schrauben-Dosiersysteme

Sogenannte Rotations-Schrauben-Dosiersysteme sehen eine zumeist über einen Getriebemotor antreibbare Rotationsschraube vor, die als Förderschraube für das auszutragende viskose Medium dient und axial zur Dispensernadel angeordnet ist. Längs zur Förderschraube wird das zu dispensende, viskose Medium unter niedrigem Druck zugeführt, beispielsweise unter Verwendung des vorstehend bezeichneten Zeit/Druck-Kartuschen-Dosiersystems. Je nach Rotationsgeschwindigkeit der als Rotationsschraube ausgebildeten Förderschraube kann der durch die Nadeleinheit ausgetragene Volumenstrom an viskosem Medium feinstdosiert eingestellt werden.

### c) Peristaltik Dispenser

Wieder dient eine mit viskosem Medium gefüllte Kartusche zum gezielten Austrag des Mediums unter geringem Druck in eine Art Plastiktube, die zwei schließbare Tubenenden vorsieht. Wird ein Verschluss an einem Ende geöffnet, kann das Medium aus der Kartusche in die Tube hineinfließen. Der erste Verschluss wird daraufhin geschlossen und der zweite Verschluss entsprechend geöffnet, wobei ein zwischen beiden Verschlüssen vorgesehener Stössel auf die Tube drückt, um das viskose Medium durch die zweite Öffnung in eine entsprechende Dispensernadel zu fördern.

### d) Kolben-Positiv-Displacement-Dosiersysteme

Sogenannte Kolben-Positiv-Displacement-Dosiersysteme weisen in aller Regel eine mit viskosem Medium gefüllte Kartusche auf, die das Medium unter geringem Druck durch einen Kanal zu einer Pumpkammer leitet, längs der ein Kolben bewegbar angeordnet ist, der bei Bewegung nach oben einen Unterdruck innerhalb der Pumpkammer erzeugt, wodurch das viskose Material aus der Kartusche in die Pumpkammer fließt. Wenn sich der Kolben nach unten bewegt, wird die Materialzuführung längs der Kartusche unterbrochen und der Kolben drückt die gewünschte Menge des Mediums durch eine entsprechende Dispensernadel, die axialwärts zur Pumpkammer angeordnet ist, aus.

Vorstehend kurz umrissene Dispenser-Systeme vermögen zwar grundsätzlich viskose Medien volumendosiert an lokal vorgebbare Bereiche auszutragen, doch sind der Genauigkeit im Hinblick auf kleinste Volumenabgaben sowie der hochpräzisen Reproduzierbarkeit der abgegebenen Volumenmenge bezogen über die gesamte Entleerung einer mit viskosem Medium angefüllten Kartusche Grenzen gesetzt. So bieten die beschriebenen Dispenser-Systeme und Verwendung von Kartuschen eine schlechte Volumen-Wiederholungsgenauigked, d.h. die Volumina einzelner nacheinander ausgebrachter Dots variieren zunehmen, zumal sich zum einen die Viskosität des Materials aufgrund von Schwankungen der Feuchtigkeit und Temperatur ändert und infolgedessen eine entsprechende Veränderung des Druckwertes notwendig wird, um ein gleiches Volumen zu dispensen. Zum anderen tritt eine Änderung des dispensten Volumens auf, sofern der gleiche Druck an der vollen wie an der fast leeren Kartusche angelegt würde. So ändert sich beispielsweise der Volumenaustrag aus einer Kartusche bei konstantem Förderdruck von bis zu 19% bei Verwendung einer 10 cm³ -Kartusche.

Die vorstehende Problematik lässt sich technisch bisher am besten mit den vorstehend unter Punkt d) bezeichneten Kolben-Positiv-Displacement-System beherrschen, jedoch sind derartige Systeme konstruktionsbedingt am aufwendigsten und somit am kostspieligsten. Auch stoßen die vorstehend bezeichneten Dosiersysteme an Funktionsgrenzen, im Bestreben, derartige Systeme zu miniaturisieren.

Zudem tendieren bekannte Dispenser-Systeme beim Abheben der Dosiernadel, jeweils nach einem Materialaustrag, zum Nachtropfen, da der längs der Dosiernadel für den Materialaustrag erforderliche Überdruck nicht oder nicht rechtzeitig genug abgebaut wird.

Letztlich sind keine Dispenser-Systeme bekannt, die unabhängig von äußeren Betriebs- oder Umgebungsparametem arbeiten, wodurch die Reproduzierbarkeit hinsichtlich eines konstanten Austrages einer bestimmten Volumenmenge an viskosen Material bei zyklischer Arbeitsweise unbefriedigend ist. Gleiches gilt für den konstanten Stoffaustrag beim kontinuierlichen Dispensen, insbesondere im Falle geringster zu dispensender Volumenströme.

DE 40 12 879 A1 offenbart eine Vorrichtung zum dosierten Ausbringen eines viskosen Mediums aus einer Kartuschen-Nadeleinheit, mit einer Kolbeneinheit, die mittels eines Aktuators angetrieben wird, axialwärts in die einseitig offen ausgebildete Kartusche eindringt und mittels dosierter Druckbeaufschlagung innerhalb der Kartusche das viskose Medium durch die Nadeleinheit mengendosiert austrägt. In dieser Vorrichtung werden ein Temperatursensor und ein Drucksensor vorgesehen, die Temperatur und Druck innerhalb der Kartusche erfassen und mit einer Steuereinheit verbunden sind. Der Temperatursensor befindet sich innerhalb einer Hülse in der Kolbeneinheit, neben aber nicht im Kontakt mit dem Kolbenkopf und nicht im Kontakt mit dem Medium. Die Druckerfassung erfolgt längs der den Kolben mit Druck beaufschlagenden Druckleitung.

DE 37 28 054 A1 offenbart eine ähnliche Vorrichtung, in der die Temperatur des Mediums bestimmt wird. Wo der Sensor diese Temperatur misst, ist nicht beschrieben.

FR 2 597 025 offenbart eine ähnliche Vorrichtung, in der der Druck des Mediums innerhalb der Kartusche bestimmt wird, wobei der Drucksensor direkt im Kontakt mit dem Medium ist, aber nicht am Kolbenkopf angebracht ist.

EP 0 782 886 A2 offenbart eine ähnliche Vorrichtung, in der der Kolben mit einem Durchlass zur Entlüftung der Kartusche aufweist.

### Darstellung der Erfindung

Der Erfindung liegt die Aufgabe zugrunde, eine Vorrichtung sowie ein Verfahren zum dosierten Ausbringen eines viskosen Mediums der vorstehend genannten Gattung derart weiterzubilden, dass eine Volumenabgabe an viskosem Medium höchst präzise eingestellt und vorgenommen werden kann und dies mit einer gleichbleibenden Reproduzierbarkeit während der gesamten Entleerung einer Kartusche, unabhängig von sich ändernden Betriebs- bzw- Umgebungsparametern. Der hierfür erforderliche Aufwand soll möglichst gering gehalten werden, um ein möglichst kostengünstiges Dispenserkonzept anbieten zu können. Die erfindungsgemäße Vorrichtung soll überdies das beim Stand der Technik bekannte Nachtropfen nach Abgabe einer kleinsten Volumenmenge an viskosem Medium zuverlässig verhindern und zugleich eine große Verwendungsvielfalt in Hinblick auf kontinuierliches sowie zyklisches Dispensen gewährleisten. Ferner gilt es, die erfindungsgemäße Vorrichtung modular aufzubauen, um eine möglichst einfache Handhabung, Reinigung und Wartung zu erzielen. Auch soll die Dispenservorrichtung zur Serienfertigung im wirtschaftlichen Maßstab geeignet sein und die Verwendung unterschiedlicher Kartuschengrößen, wie sie auf dem Markt erhältlich sind, ermöglichen.

Die Lösung der der Erfindung zugrunde liegenden Aufgabe ist in Anspruch 1 angegeben. Gegenstand des Anspruches 10 ist ein erfindungsgemäßes Verfahren zum dosierten Ausbringen eines viskosen Mediums. Die den Erfindungsgedanken vorteilhaft weiterbildenden Merkmale sind Gegenstand der Unteransprüche sowie der Erfindung, insbesondere unter Bezugnahme auf die Beschreibung eines Ausführungsbeispiels zu entnehmen.

Der Erfindungsgedanke knüpft entgegen der allgemeinen Entwicklungslinie gattungsgemäßer Dispenser-Vorrichtungen, wie sie eingangs unter Bezugnahme auf die unterschiedlichen Dispenser-Systeme zu den Punkten a) bis d) kurz skizziert worden sind, an einer erfindungsgemäßen Weiterbildung des Zeit/Druck-Kartuschen-Dosiersystems an, das im Vergleich zu allen übrigen bekannten Dispenser-Systemen am weitest von den vorstehend geforderten Eigenschaften entfernt ist.

Erfindungsgemäß ist eine Vorrichtung zum dosierten Ausbringen eines viskosen Mediums aus einer Kartuschen-Nadeleinheit, wie sie auf dem Markt verfügbar ist, mit einer Kolbeneinheit, die mittels eines Aktuators angetrieben, axialwärts in die einseitig offen ausgebildete Kartusche eindringt und mittels dosierter Druckbeaufschlagung innerhalb der Kartusche das viskose Medium durch die Nadeleinheit mengendosiert austrägt, derart weitergebildet, dass die Kolbeneinheit einen in die Kartusche eindringenden Kolbenkopf vorsieht, an dem Sensoren zum Erfassen von Druck und/oder Temperatur angebracht sind, die mit dem in der Kartusche befindlichen viskosen Medium in Kontakt bringbar sind. Mit Hilfe der Sensoren ist es möglich, vorzugsweise Druck und Temperatur gemeinsam innerhalb des auszutragenden viskosen Mediums zu erfassen, während das Medium durch die Dispensernadel vermittels des Kolbenkopfes druckbeaufschlagt getrieben wird. Die während des Ausbringvorganges in situ erhaltenen Sensorsignale hinsichtlich Temperatur und Druck werden einer Steuereinheit zugeführt, die der Ansteuerung des Aktuators dient. Die Steuereinheit steuert den Aktuator in Abhängigkeit einer aus der Kartuschen-Nadeleinheit auszutragenden Sollmenge an viskosem Medium, die individuell, je nach Anforderungen vorgebbar ist, sowie in Abhängigkeit von dem sensorisch erfassten Druck und/oder der sensorisch erfassten Temperatur innerhalb des viskosen Mediums. Auf diese Weise gelingt es, nicht nur Temperaturänderungen während eines über eine bestimmte Zeitdauer kontinuierlich oder zyklisch erfolgenden Ausbringvorganges zu erfassen, um entsprechende Kompensationsmaßnahmen zu treffen, sondern auch die innerhalb der Kartusche vorherrschenden Druckverhältnisse zu erfassen, die sich während einer vollständigen Leerung der Kartusche zu ändern vermögen. Erst durch die Erfassung von dem aktuell vorherrschenden Druck innerhalb der Kartusche kann ein exakt konstanter Volumenaustrag an viskosem Medium aus der Dispensernadel unabhängig vom aktuellen Füllgrad der Kartusche gewährleistet werden. Der Kolbenkopf ist von einem fluiddicht verschließbaren Entlüftungskanal durchsetzt, durch den Luft, die zwischen dem Kolbenkopf und dem sich in der Kartusche befindlichen viskosen Medium eingeschlossen wird, entweicht. So wird ein unmittelbarer Kontakt des Drucksensors sowie des Temperatursensors mit dem im Inneren der Kartusche befindlichen viskosen Medium hergestellt.

Neben der exakten Volumendosierung des auszutragenden viskosen Mediums ermöglicht die erfindungsgemäße Vorrichtung überdies einen gezielten Druckabbau längs der Dispensernadel unmittelbar nach Ausbringen einer definierten Volumeneinheit an viskosem Medium. Dies erfolgt durch gezieltes axiales Zurückziehen der Kolbeneinheit zur Aufhebung des in der Kartusche vorherrschenden Überdruckes um eine definierte Wegstrecke. Als Aktuator dient in einer bevorzugten Ausführungsform ein hochauflösender Schrittmotor, der zur elektrischen Ansteuerung mit der vorstehend erwähnten Steuereinheit verbunden ist.

### Kurze Beschreibung der Erfindung

Die Erfindung wird nachstehend ohne Beschränkung des allgemeinen Erfindungsgedankens anhand von Ausführungsbeispielen unter Bezugnahme auf die Zeichnungen exemplarisch beschrieben. Es zeigen:
- Fig. 1: erfindungsgemäße Dispenser-Vorrichtung in kompakter geschlossener Bauform,
- Fig. 2a,b,c: perspektivische Schnittdarstellungen durch die erfindungsgemäß ausgebildete Vorrichtung, sowie
- Fig. 3a,b,c,d: Mehrseitenansicht sowie Längsschnittdarstellungen der Dispenser-Vorrichtung.

### Wege zur Ausführung der Erfindung, gewerbliche Verwendbarkeit

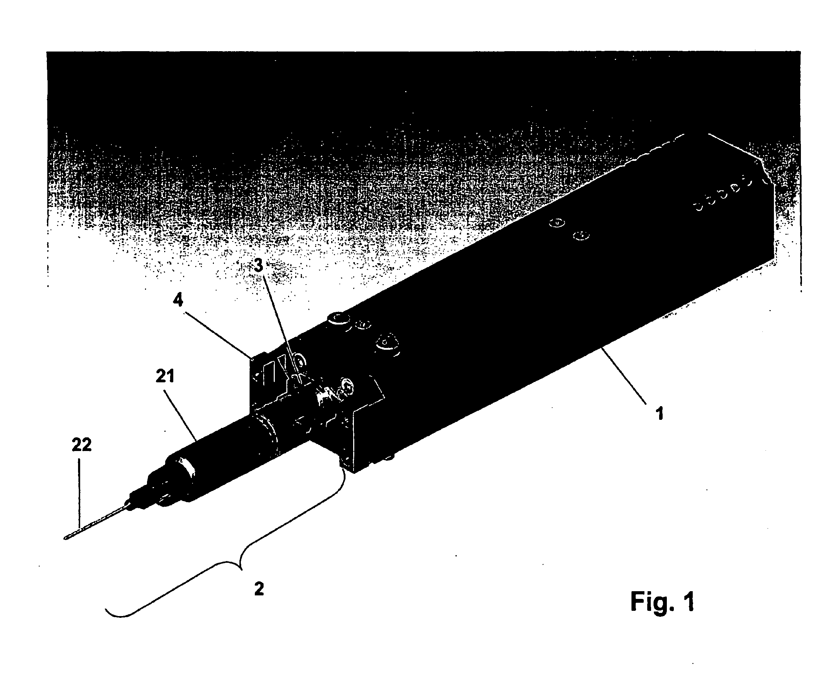

Fig. 1 zeigt in perspektivischer Darstellung eine bevorzugte Ausführungsform der erfindungsgemäßen Dispenser-Vorrichtung, die ein handhabbares Gehäuse 1 vorsieht, aus dem frontalseitig eine marktübliche Kartuschen-Dispenser-Nadeleinheit 2 herausragt. Die Kartuschen-Dispenser-Nadeleinheit 2 weist dem Gehäuse 1 zugewandt eine Flanschstruktur 3 auf, über die die Kartuschen-Dispenser-Nadeleinheit 2 über das lösbar fest mit dem Gehäuse 1 verbindbare Frontplattensystem 4 gehäuseseitig befestigbar ist. Über die lösbar feste Verbindung mit dem Gehäuse 1 ist es möglich, Kartuschen-Dispenser-Nadeleinheiten unterschiedlicher Länge und Größe mit dem Gehäuse 1 zu verbinden, in dem die in den folgenden Figuren dargestellten Einzelkomponenten integriert sind.

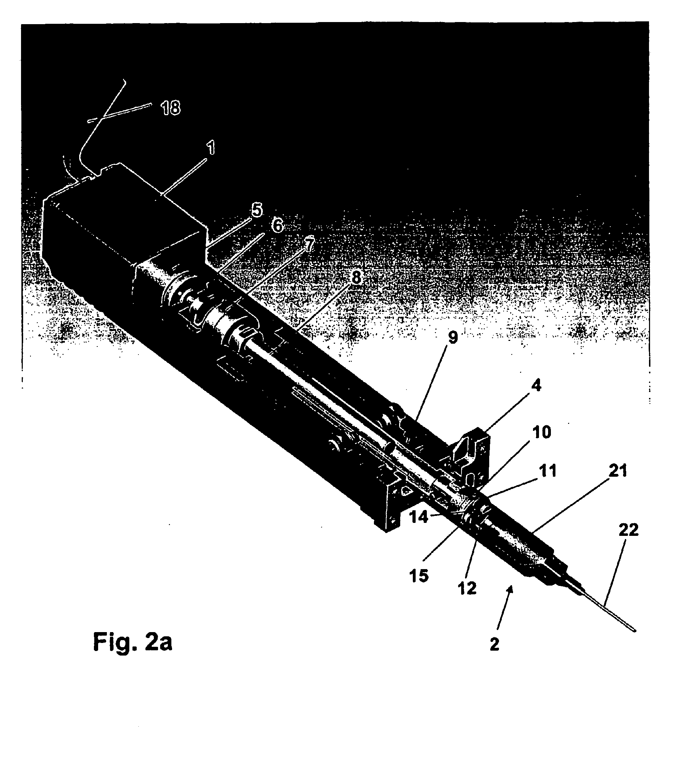

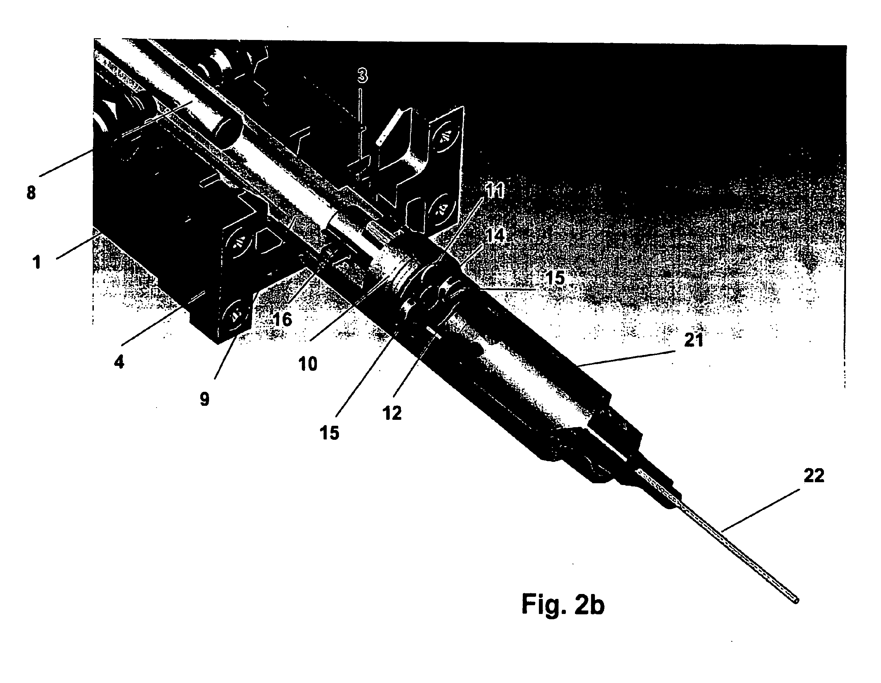

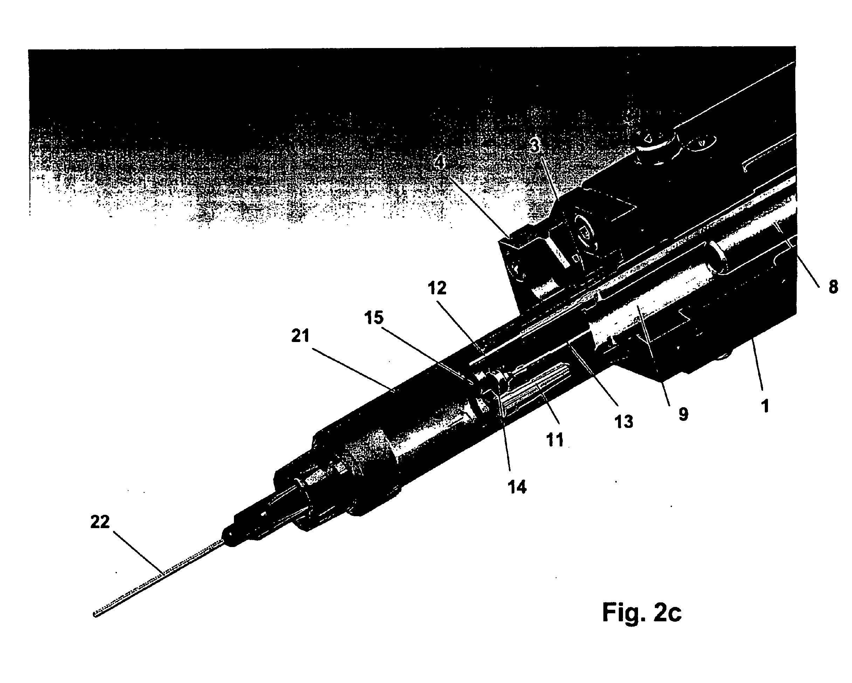

In Fig. 2a ist eine perspektivische Teil-Längsschnittdarstellung der in Fig. 1 abgebildeten Dispenser-Vorrichtung dargestellt. Das Gehäuse ist zur Sichtbarmachung der innenliegenden Komponenten teilweise aufgeschnitten dargestellt. Fig. 2b zeigt eine vergrößerte Darstellung des vorderen Bereiches der Dispenser-Vorrichtung gemäß Bilddarstellung in Fig. 2a. Fig. 2c zeigt eine weitere detailliertere Längsschnittdarstellung der im vorderen Bereich der Dispenser-Vorrichtung enthaltenen Komponenten. Zum besseren Verständnis der weiteren Ausführungen können in Abhängigkeit der jeweils beschriebenen Komponenten, auf die jeweils mit entsprechenden Bezugszeichen referenziert wird, alle vorstehend zitierten Figuren zusammen in Betracht gezogen werden.

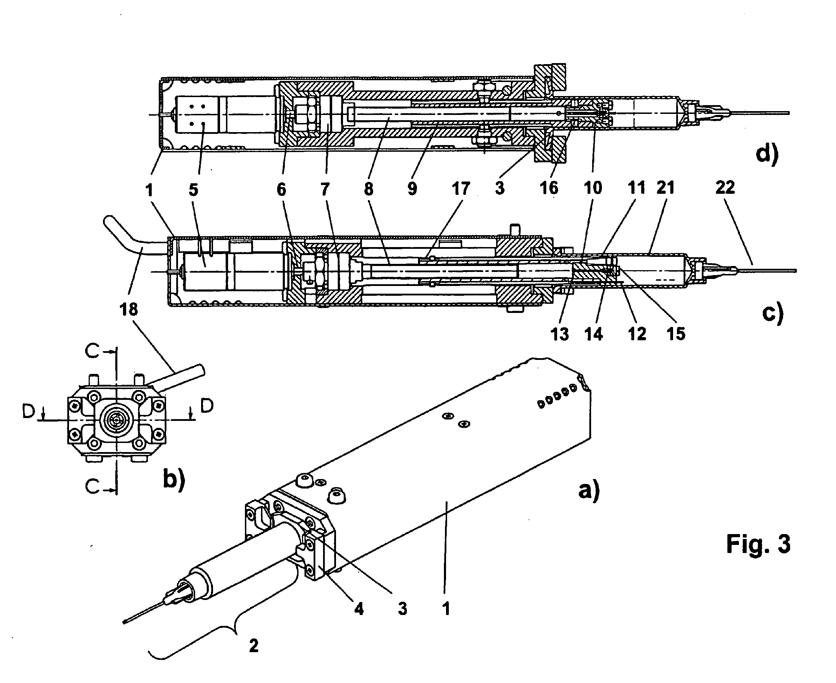

Überdies vermittelt die technische Zeichnungsdarstellung in Fig. 3 einen präzisen Eindruck über das exakte Ineinanderwirken der im weiteren beschriebenen Einzelkomponenten der erfindungsgemäß ausgebildeten Dispenser-Vorrichtung. So gleicht Fig. 3a der Bilddarstellung in Fig. 1, Fig. 3b zeigt eine Draufsicht auf die Frontplatte 4 der Dispenser-Vorrichtung und definiert Schnittebenen C-C sowie D-D, längs der sich die in den Fig. 3c und 3d dargestellten Längsschnittbilder ergeben.

Die weitere Beschreibung des bevorzugten Ausführungsbeispiels der erfindungsgemäß ausgebildeten Dispenser-Vorrichtung nimmt somit Bezug auf alle eingangs vorgestellten Figuren.

Wie bereits erwähnt, ermöglicht das am Gehäuse 1 angebrachte Frontplattensystem 4 die Implementierung marktüblicher Kartuschen-Dispenser-Nadeleinheiten 2, die jeweils eine einseitig offene, mit viskosem Medium gefüllte, hülsenartig ausgebildete Kartusche 21 und eine an ihrem einseitig offenen Ende gegenüberliegenden Ende vorgesehene Dispenser-Nadel 22 aufweisen.

Im Inneren des Gehäuses 1 ist ein elektrisch betriebener Schrittmotor 5 vorgesehen, der vorzugsweise ein internes Getriebe aufweist und dessen Abtriebswelle 6 mit einem Axialkugellager 7 verbunden ist, das abtriebsseitig wiederum mit einer Spindel 8 drehfest verbunden ist. Die Spindel 8 ragt innwandig in eine hohl ausgebildete Kolbenstange 9, die über ein Innengewinde mit der Spindel 8 in Wirkverbindung tritt. Die Kolbenstange 9 wiederum ist an ihrem, der Spindel 8 abgewandten Ende lösbar fest mit einem Kolbenkopf 10 verfügt, an dessen der Kartusche 21 zugewandten Stirnseite ein Drucksensor 11 sowie ein Temperatursensor 12 vorgesehen sind.

Die vorstehend erläuterten Einzelkomponenten der Dispenser-Vorrichtung sind modular aufgebaut und können in Abhängigkeit von der jeweiligen Größenwahl der Kartuschen-Dispenser-Nadeleinheit 2 individuell zusammengestellt werden. So ermöglicht der modulare Aufbau es insbesondere, die Kolbenstange 9 sowie den damit lösbar fest verfügten Kolbenkopf 10 ohne großen wartungstechnischen Aufwand zu Reinigungszwecke oder zur Implementierung entsprechend an die Dimension der Kartuschen-Dispenser-Nadeleinheit 2 angepasster Kolbeneinheiten, jeweils umfassend die Kolbenstange 9 sowie einen Kolbenkopf 10, auszutauschen.

Der mit der Kolbenstange 9 lösbar fest verfügte Kolbenkopf 10 ragt bei in die Frontplatte 4 eingesetzter Kartuschen-Dispenser-Nadeleinheit 2 axialwärts in die Kartusche 21 ein und liegt mit seiner zylinderförmig ausgebildeten Mantelfläche axialwärts beweglich fluiddicht an der Innenwand der Kartusche 21 an. Systembedingt ist es nahezu unvermeidbar, sofern man nicht unter Vakuumbedingungen arbeitet, dass sich nach Einsetzen einer gefüllten Kartusche in die Dispenser-Einheit, wobei der Kolbenkopf 10 zumindest teilweise axialwärts in die Kartusche 21 hineinragt, ein Luftpolster zwischen dem Kolbenkopf 10 und dem im Inneren der Kartusche 21 befindlichen viskosen Medium ausbildet, das es gilt, gezielt zu beseitigen, um somit einen unmittelbaren Kontakt des Drucksensors 11 sowie Temperaturfühlers 12 mit dem im Inneren der Kartusche 21 befindlichen viskosen Medium herzustellen. Hierfür durchragt ein Entlüftungskanal 13 den Kolbenkopf 10 axialwärts, der kartuschenseitig von einem Verschlußstössel 14 fluiddicht abdichtbar ist. Der Verschlußstössel 14 ist mit Hilfe zweier Schrauben 15 gegen ein axialwärts nach vorn gerichtetes Herausrutschen gesichert und ist zu Zwecken der Entlüftung kartuschenseitig axialwärts nach vorn geschoben, um den Entlüftungskanal 13 zu öffnen. Sobald das zwischen dem Kolbenkopf 10 und dem viskosen Material eingeschlossene Luftpolster im Wege der Entlüftung entwichen ist, tritt der Verschlußstößel 14 in unmittelbaren Kontakt mit dem im Inneren der Kartusche 21 bevorrateten viskosen Material und wird von diesem gegen den Kolbenkopf 10 gepresst zur fluiddichten Abdichtung des Entlüftungskanals 13. In gleicher Weise treten der Drucksensor 11 sowie der Temperatursensor 12 in unmittelbaren Kontakt mit dem zu dispensenden viskosen Medium, so dass eine Druck- und Temperaturmessung innerhalb des nicht weiter zeichnerisch dargestellten viskosen Mediums erfolgen kann.

Wie bereits erwähnt, ist der Kolbenkopf 10 lösbar fest mit der Kolbenstange 9 verfügt, wobei ein Querbolzen 16, der seitlich durch die Kolbenstange 9 sowie Teile des Kolbenkopfes 10 hindurchragt, für eine axialseitige sowie gegen Verdrehung zwischen Kolbenstange 9 und Kolbenkopf 10 gesicherte Fixierung sorgt.

Zur exakt axialwärts gerichteten Positionierung des Kolbenkopfes 10 innerhalb der Kartusche 21 dient der innerhalb des Gehäuses 1 integrierte Schrittmotor 5, der unter Zwischenschaltung eines im Schrittmotor 5 integrierten Getriebes sowie einer Axialkupplung 7 die drehbare aber axialwärts feststehende Spindel 8 in Rotation versetzt. Die Spindel 8 weist zumindest im Eingriffbereich mit der Kolbenstange 9 ein zeichnerisch nicht weiter dargestelltes Außengewinde auf, das in Eingriff mit einem Innengewinde der zumindest teilweise hohl ausgebildeten Kolbenstange 9 eingreift. Durch den Gewindeeingriff zwischen Spindel 8 und Kolbenstange 9 sind diese entsprechend leicht voneinander zu trennen. Die Kolbenstange 9 ist zur Übersetzung der Rotationsbewegung der Spindel 8 in eine axialwärts gerichtete Verschiebung durch einen in Fig. 3c dargestellten Nuteingriff 17 gegen Verdrehung gesichert und zugleich durch die Ausbildung des Nuteingriffes 17 in Form einer Linearnut innerhalb der Kolbenstange 9 zur axialen Bewegung befähigt.

In einer bevorzugten Ausführungsform ist innerhalb des Gehäuses 1 zur axialen Lagefeststellung der Kolbenstange 9 an geeigneter Stelle ein Positionssensor (nicht abgebildet) vorgesehen, durch den gezielt eine Ausgangs- bzw. Referenzlage der Kolbenstange 9 bestimmt werden kann. Selbstverständlich ist es möglich auch mehrere Positionssensoren längs der Kolbenstangenerstreckung innerhalb des Gehäuses vorzusehen.

Der Ausbringvorgang von viskosem Medium durch die Dispenser-Nadel 22, der je nach Einatz- und Anwendungsfall zyklisch zur Herstellung kleinster Dots oder kontinuierlich zur Erzeugung durchgehender linienhaft ausgebildeter Materialdepositionen auf einer technischen Oberfläche durchgeführt werden kann, erfolgt durch eine kontrollierte Axialbewegung des Kolbenkopfes 10 innerhalb der Kartusche 21. Die kontrollierte Kolbenkopfbewegung erfolgt auf Basis der von dem Drucksensor 11 und dem Temperatursensor 12 erfassten Messsignale, die einer nicht in den Figuren dargestellten Steuereinheit zugeführt werden, welche unter Berücksichtigung einer aus der Kartuschen-Dispenser-Einheit auszubringenden Sollmenge an viskosem Medium den Schrittmotor 1 ansteuert. Die Steuereinheit kann als externe, programmierbare Einheit ausgebildet sein, die über eine Kabelverbindung 18 (siehe Fig. 2a oder Fig. 3c) mit der Dispenser-Einheit verbunden ist. Ebenso ist es möglich, die Steuereinheit auf Basis von Mikroprozessoren in Form einer klein bauenden Komponente in das Innere des Gehäuses 1 zu integrieren. Mit Hilfe der aktiven Überwachung von Druck und Temperatur innerhalb der Kartusche während des Ausbringvorganges ist es möglich, den axialwärts gerichteten Kolbenvorschub in Abhängigkeit von sich möglicherweise während des Ausbringvorganges ändernden Betriebsparametern vorzunehmen. Dies gestattet es erstmalig, das dosierte Ausbringen eines viskosen Mediums durch die Dispenser-Nadel 22 mit höchster Präzision in Bezug auf Mengendosierung vorzunehmen. Auch vermag die aktive Überwachung des Ausbringvorganges die axiale Kolbenführung derart zu beeinflussen, dass nach einem definierten Volumenaustrag, bspw. zur Herstellung eines Dots auf einer technischen Oberfläche, der Kolbenkopf 10 zur Aufhebung des in der Kartusche vorherrschenden Überdruckes eine definierte Wegstrecke zur Vermeidung von Nachtropfeffekten zurückgezogen wird.

Zusammenfassend können folgende Einzelvorteile genannt werden:
- Durch den Einsatz eines hochauflösenden Schrittmotors mit einem entsprechend angepassten Getriebe ist es möglich, die Kolbeneinheit über eine definierte Wegstrecke in kleinsten Schritten zu bewegen und sehr fein aufgelöste und insbesondere reproduzierbare Volumina an zu dispensenden viskosem Material zu erzeugen.
- Mit der integrierten Sensorik im Hinblick auf Druck- und Temperaturmessung können sich ändernde Betriebsbedingungen in situ, d.h. während des Ausbringvorganges, erfasst und somit eine individuelle Anpassung des Fördervolumens vorgenommen werden.
- Mit einem möglichen definierten Zurückbewegen der Kolbeneinheit unmittelbar nach Ausbringen einer bestimmten Menge an viskosem Material, kann ein in der Kartusche gemessener Überdruck abgebaut und somit ein Nachtropfen verhindert werden.
- Mit dem erfindungsgemäßen Dispenser-System sind sehr gute dynamische Eigenschaften erreichbar hinsichtlich zyklischem und kontinuierlichem Ausbringen von zu dispensendem Material, wodurch eine Anwendung in der Serienfertigung möglich ist.
- Der modulare Aufbau der erfindungsgemäßen Dispenser-Vorrichtung ermöglicht eine einfache Handhabung, Reinigung und Wartung sowie eine Anpassung auf unterschiedliche Kartuschengrößen.
- Das lösbar feste Frontplattensystem ermöglicht eine Implementierung aller gängiger Kartuschensysteme.

Mit dem erfindungsgemäß ausgebildeten Dispenser-System ist die Herstellung kleinster Dots auf technischen Oberflächen mit jeweils einem Eigenvolumen von bis zu 0,5 nl möglich, wobei eine Abweichung unter den einzelnen Dot-Volumina unter Verwendung gängiger Kartuschengrößen von 5 oder 10 cm³ während der gesamten Entleerung einer Kartusche lediglich von weniger als 4% zu verzeichnen ist. Dies stellt, verglichen zu den technisch einfach zu realisierenden Anforderungen an das erfindungsgemäß ausgebildete Dispenser-System im Vergleich zu allen bisher bekannten Dispenser-Systemen bislang nicht erreichbare Dosierpräzisionen dar.

### Bezugszeichenliste

- 1: Gehäuse
- 2: Kartusche-Dispenser-Nadeleinheit
- 21: Kartusche
- 22: Dispenser-Nadel
- 3: Flanschstruktur
- 4: Frontplattensystem
- 5: Schrittmotor
- 6: Abtriebswelle
- 7: Axialkupplung
- 8: Spindel
- 9: Kolbenstange
- 10: Kolbenkopf
- 11: Drucksensor
- 12: Temperatursensor
- 13: Entlüftungskanal
- 14: Entlüftungsstösel
- 15: Befestigungsschrauben
- 16: Querbolzen
- 17: Längsnut
- 18: Kabelstrang

## Patentansprüche

1. Vorrichtung zum dosierten Ausbringen eines viskosen Mediums aus einer Kartuschen-Nadeleinheit, mit einer Kolbeneinheit, die mittels eines Aktuators angetrieben wird, axialwärts in die einseitig offen ausgebildete Kartusche eindringt und mittels dosierter Druckbeaufschlagung innerhalb der Kartusche das viskose Medium durch die Nadeleinheit mengendosiert austrägt, wobei ein Drucksensor und/oder ein Temperatursensor vorgesehen sind, die Druck und Temperatur innerhalb der Kartusche erfassen und mit einer Steuereinheit verbunden sind, die den Aktuator in Abhängigkeit von einer aus der Kartuschen-Nadeleinheit auszutragenden Sollmenge an viskosem Medium sowie von dem sensorisch erfassten Druck und/oder der sensorisch erfassten Temperatur innerhalb des viskosen Mediums steuert, **dadurch gekennzeichnet, dass** die Kolbeneinheit einen in die Kartusche eindringenden Kolbenkopf vorsieht, an dem der Drucksensor und/oder der Temperatursensor angebracht sind, die mit dem in der Kartusche befindlichen viskosen Medium in Kontakt bringbar sind, und
dass der Kolbenkopf wenigstens von einem fluiddicht verschließbaren Entlüftungskanal durchsetzt ist, durch den Luft, die zwischen dem Kolbenkopf und dem sich in der Kartusche befindlichen viskosen Medium eingeschlossen wird, entweicht.

2. Vorrichtung nach Anspruch 1,
**dadurch gekennzeichnet, dass** die Kolbeneinheit eine Kolbenstange und den an einem Ende der Kolbenstange lösbar fest anbringbaren Kolbenkopf aufweist

3. Vorrichtung nach Anspruch 1 oder 2,
**dadurch gekennzeichnet, dass** der Entlüftungskanal den Kolbenkopf axialwärts zur Kolbenstange durchragt, und
dass ein Verschlussstößel innerhalb des Entlüftungskanals axialbeweglich vorgesehen ist, der den Entlüftungskanal bei Inkontaktreten mit dem viskosen Medium innerhalb der Kartusche fluiddicht verschließt.

4. Vorrichtung nach Anspruch 2 oder 3,
**dadurch gekennzeichnet, dass** die Kolbenstange an ihrem dem Kolbenkopf gegenüberliegenden Endbereich mit einer Spindel in Wirkverbindung steht, die wiederum mit dem Aktuator in Wirkverbindung steht.

5. Vorrichtung nach Anspruch 4,
**dadurch gekennzeichnet, dass** die Kolbenstange und die Spindel über ein Gewinde in Wirkverbindung stehen.

6. Vorrichtung nach Anspruch 4 oder 5,
**dadurch gekennzeichnet, dass** die Kolbenstange von der Spindel lösbar ausgebildet ist.

7. Vorrichtung nach einem der Ansprüche 4 bis 6,
**dadurch gekennzeichnet, dass** der Aktuator ein Schrittmotor ist, der über eine Getriebeeinheit mit der Spindel verbunden ist.

8. Vorrichtung nach einem der Ansprüche 4 bis 7,
**dadurch gekennzeichnet, dass** ein Gehäuse vorgesehen ist, das zumindest die Spindel sowie teilweise die Kolbenstange umgibt, und
dass das Gehäuse eine Aufnahmestruktur vorsieht, in die die Kartusche-Nadeleinheit lösbar fest mit dem Gehäuse einsetzbar ist, so dass der Kolbenkopf in die einseitig offen ausgebildete Kartusche hineinragt.

9. Vorrichtung nach einem der Ansprüche 1 bis 8,
**dadurch gekennzeichnet, dass** eine Messeinrichtung vorgesehen ist, die die axiale Position der Kolbeneinheit relativ zur Kartusche erfasst.

10. Vorrichtung nach Anspruch 9.
**dadurch gekennzeichnet, dass** die Messeinrichtung wenigstens einen Positionssensor umfasst, der eine axiale Position der Kolbeneinheit erfasst.

11. Verfahren zum dosierten Ausbringen eines viskosen Mediums aus einer Kartuschen-Nadeleinheit, mit einer Kolbeneinheit, die einen in die Kartusche eindringenden Kolbenkopf vorsieht, der Ober einen Aktuator angetrieben wird und axialwärts in die einseitig offen ausgebildete Kartusche eindringt und mittels dosierter Druckbeaufschlagung innerhalb der Kartusche das viskose Medium durch die Nadeleinheit mengendosiert austrägt, wobei während des dosierten Ausbringens des viskosen Mediums aus der Kartusche durch die Nadeleinheit Druck und/oder Temperatur innerhalb des auszutragenden viskosen Mediums in der Kartusche erfasst werden und der dosierte Ausbringvorgang des viskosen Mediums auf der Grundlage des erfassten Druckes und/oder der erfassten Temperatur erfolgt,
**dadurch gekennzeichnet, dass** in einem ersten Schritt zwischen dem Kolbenkopf und dem sich In der Kartusche befindlichen viskosen Medium eingeschlossene Luft im Wege einer Entlüftung beseitigt wird, so dass in einem zweiten Schritt zur Druck- und/oder Temperaturmessung am Kolbenkopf vorgesehene Sensoren in unmittelbaren Kontakt mit dem viskosen Medium treten.

12. Verfahren nach Anspruch 11,
**dadurch gekennzeichnet, dass** der dosierte Ausbringvorgang durch Ansteuerung des Aktuators vorgenommen wird, durch den die Kolbeneinheit axialwärts auf das in der Kartusche befindliche viskose Medium einwirkt, und
dass die Ansteuerung unter Berücksichtigung einer zu dosierenden Soll-Ausbringmenge sowie vom erfassten Druck und/oder Temperatur vorgenommen wird.

13. Verfahren nach Anspruch 11 oder 12,
**dadurch gekennzeichnet, dass** unmittelbar nach einem dosierten Ausbringvorgang ein innerhalb der Kartusche entstehender Überdruck durch gesteuertes Zurückziehen der Kolbeneinheit abgebaut wird.

14. Verwendung der Vorrichtung nach einem der Ansprüche 1 bis 10 zum gezielt positionierten Ausbringen von Lot- oder Klebepasten auf einer technischen Oberfläche zum Fügen wenigstens zweier Bauteile an einer Kontaktstelle, an der die Bauteile mechanisch und/oder unter Ausbildung eines elektrischen Kontaktes miteinander verfügt werden.

15. Verwendung der Vorrichtung nach einem der Ansprüche 1 bis 10,
**dadurch gekennzeichnet, dass** das viskose Medium kontinuierlich oder diskontinuierlich ausgetragen wird.

## Claims

1. A device for metered delivery of a viscous medium from a cartridge needle unit, having a piston unit which penetrates into the cartridge, which is implemented as open on one side, driven axially using an actuator and discharges the viscous medium through the needle unit in a metered quantity using metered pressure impingement within the cartridge, a pressure sensor and/or a temperature sensor being provided, which detect the pressure and temperature inside the cartridge and are connected to a control unit, which controls the actuator as a function of a setpoint quantity of viscous medium to be delivered from the cartridge needle unit and of the pressure and/or the temperature detected inside the viscous medium by the sensors, **characterized in that** the piston unit provides a piston head penetrating into the cartridge, to which the pressure sensor and/or the temperature sensor are attached, which may be brought into contact with the viscous medium located in the cartridge, and
the piston head is penetrated at least by a ventilation channel which may be closed fluid-tight, through which air which is enclosed between the piston head and the viscous medium located in the cartridge escapes.

2. The device according to Claim 1,
**characterized in that** the piston unit has a piston rod and the piston head, which may be removably attached solidly to one end of the piston rod.

3. The device according to Claim 1 or 2,
**characterized in that** the ventilation channel penetrates the piston head toward the axis from the piston rod, and
a closure plunger is provided so it is axially movable inside the ventilation channel, which encloses the ventilation channel fluid-tight upon coming into contact with the viscous medium inside the cartridge.

4. The device according to Claim 2 or 3,
**characterized in that** the piston rod is operationally linked on its end area diametrically opposite to the piston head to a spindle, which is in turn operationally linked to the actuator.

5. The device according to Claim 4,
**characterized in that** the piston rod and the spindle are operationally linked via a thread.

6. The device according to Claim 4 or 5,
**characterized in that** the piston rod is implemented as removable from the spindle.

7. The device according to one of Claims 4 through 6,
**characterized in that** the actuator is a stepping motor, which is connected via a gear unit to the spindle.

8. The device according to one of Claims 4 through 7,
**characterized in that** a housing is provided, which encloses the spindle and at least partially encloses the piston rod, and
the housing provides a receptacle structure, in which the cartridge needle unit may be inserted removably fixed to the housing, in such a way that the piston rod projects into the cartridge, which is implemented as open on one side.

9. The device according to one of Claims 1 through 8,
**characterized in that** a measuring unit is provided, which detects the axial position of the piston unit in relation to the cartridge.

10. The device according to Claim 9,
**characterized in that** the measuring unit comprises at least one position sensor, which detects an axial position of the piston unit.

11. A method for metered delivery of a viscous medium from a cartridge needle unit, having a piston unit which provides a piston head penetrating into the cartridge, which is driven via an actuator and penetrates axially into the cartridge, which is implemented as open on one side, and discharges the viscous medium metered by quantity through the needle unit using metered pressure impingement inside the cartridge, pressure and/or temperature within the viscous medium to be delivered being detected in the cartridge during the metered delivery of the viscous medium from the cartridge through the needle unit and the metered delivery procedure of the viscous medium being performed on the basis of the detected pressure and/or the detected temperature,
**characterized in that**, in a first step, air enclosed between the piston head and the viscous medium located in the cartridge is removed in the course of a ventilation, so that in a second step, sensors provided for pressure and/or temperature measurement on the piston head come into direct contact with the viscous medium.

12. The method according to Claim 11,
**characterized in that** the metered delivery procedure is performed by activating the actuator, through which the piston unit acts axially on the viscous medium located in the cartridge, and
the activation is performed in consideration of a setpoint delivery quantity to be metered and of the detected pressure and/or temperature.

13. The method according to Claim 11 or 12,
**characterized in that**, directly after a metered delivery procedure, an excess pressure resulting inside the cartridge is dissipated by controlled retraction of the piston unit.

14. A use of the device according to one of Claims 1 through 10 for targeted, positioned delivery of soldering or adhesive paste on a technical surface for joining at least two components at a contact point, at which the components are joined to one another mechanically and/or while forming an electric contact.

15. A use of the device according to one of Claims 1 through 10,
**characterized in that** the viscous medium is delivered continuously or discontinuously.

## Revendications

1. Dispositif de distribution d'un fluide visqueux depuis une unité d'aiguille de cartouche, comportant une unité à piston qui est actionnée au moyen d'un actionneur, pénètre dans le sens axial dans une cartouche de type ouvert et distribue en quantité dosée le fluide visqueux au moyen de l'unité d'aiguille par sollicitation par pression dosée à l'intérieur de la cartouche, étant prévus un capteur de pression et/ou un capteur de température qui enregistrent la température à l'intérieur de la cartouche et sont reliés à une unité de commande qui contrôle l'actionneur en fonction d'une quantité théorique à distribuer depuis l'unité d'aiguille de cartouche ainsi que de la pression enregistrée par capteur et/ou de la température enregistrée par capteur à l'intérieur du fluide visqueux,
**caractérisé en ce que** l'unité à piston prévoit une tête de piston pénétrant dans la cartouche et sur laquelle sont installés le capteur de pression et/ou le capteur de température qui peuvent être mis en contact avec le fluide visqueux se trouvant dans la cartouche et que,
dans la tête de piston, passe au moins un canal de purge d'air pouvant être fermé de manière étanche au fluide et à travers lequel s'échappe l'air qui est emprisonné entre la tête de piston et le fluide visqueux se trouvant dans la cartouche.

2. Dispositif selon la revendication 1,
**caractérisé en ce que** l'unité à piston comprend une culasse et la tête de piston pouvant être installée fixement de manière dissociable à une extrémité de la tige à piston.

3. Dispositif selon la revendication 1 ou 2,
**caractérisé en ce que** le canal de purge d'air traverse la tête de piston dans le sens axial en direction de la culasse et
qu'il est prévu un poussoir obturateur mobile axialement à l'intérieur du canal de purge d'air et fermant le canal de purge d'air de manière étanche au fluide en cas de mise en contact avec le fluide visqueux à l'intérieur de la cartouche.

4. Dispositif selon la revendication 2 ou 3,
**caractérisé en ce que**
la culasse, à son extrémité opposée à la tête de piston, est en interaction avec une broche qui est à son tour en interaction avec l'actionneur.

5. Dispositif selon la revendication 4,
**caractérisé en ce que** la culasse et la broche sont en interaction par l'intermédiaire d'un filetage.

6. Dispositif selon la revendication 4 ou 5,
**caractérisé en ce que**
la culasse est réalisée de manière à être dissociable de la broche.

7. Dispositif selon une des revendications 4 à 6,
**caractérisé en ce que**
l'actionneur est un moteur pas à pas qui est relié à la broche par une unité de boîte de vitesses.

8. Dispositif selon une des revendications 4 à 7,
**caractérisé en ce que**
il est prévu un boîtier qui entoure au moins la broche ainsi que partiellement la culasse et que
le boîtier prévoit une structure réceptrice dans laquelle l'unité d'aiguille de la cartouche peut être insérée fixement avec le boîtier de manière dissociable, de sorte que la tête de piston dépasse dans la cartouche réalisée ouverte d'un côté.

9. Dispositif selon une des revendications 1 à 8,
**caractérisé en ce que**
il est prévu un dispositif de mesure qui enregistre la position axiale de l'unité à piston par rapport à la cartouche.

10. Dispositif selon la revendication 9,
**caractérisé en ce que**
le dispositif de mesure comprend au moins un capteur de position qui enregistre une position axiale de l'unité à piston.

11. Procédé de distribution dosée d'un fluide visqueux depuis une unité d'aiguille de cartouche, comportant une unité à piston qui prévoit une tête de piston pénétrant dans la cartouche et qui est actionnée au moyen d'un actionneur et pénètre dans le sens axial dans la cartouche réalisée ouverte d'un côté et distribue en quantité dosée le fluide visqueux au moyen de l'unité d'aiguille par sollicitation par pression dosée à l'intérieur de la cartouche, dans lequel, pendant la distribution dosée du fluide visqueux depuis la cartouche par l'unité d'aiguille, la pression et/ou la température à l'intérieur du fluide visqueux à distribuer dans la cartouche sont mesurés et l'opération de distribution dosée du fluide visqueux a
lieu à partir de la pression enregistrée et/ou de la température enregistrée, **caractérisé en ce que**, dans une première étape, l'air emprisonné entre la tête de piston et le fluide visqueux se trouvant dans la cartouche est éliminé en vue d'une purge d'air, de sorte que, dans une deuxième étape, des capteurs prévus sur la tête de piston pour mesurer la pression et/ou la température entrent en contact direct avec le fluide visqueux.

12. Procédé selon la revendication 11,
**caractérisé en ce que** l'opération de distribution dosée est réalisée en amorçant l'actionneur grâce auquel l'unité à piston agit dans le sens axial sur le fluide visqueux se trouvant dans la cartouche et que l'amorçage est effectué en tenant compte d'une quantité de distribution théorique à doser ainsi que de la pression et/ou de la température enregistrée.

13. Procédé selon la revendication 11 ou 12,
**caractérisé en ce qu'**immédiatement après une opération de dosage, une surpression se formant à l'intérieur de la cartouche est supprimée en retirant l'unité à piston de manière contrôlée.

14. Procédé selon une des revendications 1 à 10 pour la distribution positionnée de manière ciblée de pâtes de soudage ou de collage sur une surface technique pour la jonction d'au moins deux composantes à un point de contact où les composantes sont assemblées mécaniquement et/ou en établissant un contact électrique entre elles.

15. Utilisation du dispositif selon une des revendications 1 à 10, **caractérisée en ce que** le fluide visqueux est distribué en continu ou en discontinu.
